# EUROPÄISCHE PATENTSCHRIFT

(11) **EP 0 788 951 B1**
(45) Veröffentlichungstag und Bekanntmachung des Hinweises auf die Patenterteilung: **05.12.2001**
(21) Anmeldenummer: 97100925.3
(22) Anmeldetag: 22.01.1997
(51) Int. Cl.: B60S 1/34

(54) **Wischarm einer Vorrichtung zum Wischen einer Scheibe eines Fahrzeuges**
Wiper arm of a device for wiping a vehicle windscreen
Bras d'essuie-glace d'un dispositif de balayage de pare-brise de véhicule

(30) Priorität: 08.02.1996 DE 19604473
(43) Veröffentlichungstag der Anmeldung: 13.08.1997
(73) Patentinhaber: Valeo Auto-Electric Wischer und Motoren GmbH, 74321 Bietigheim-Bissingen (DE)
(72) Erfinder: Fink, Andreas, 71723 Grossbottwar (DE)
(74) Vertreter: Dreiss, Fuhlendorf, Steimle & Becker

(56) Entgegenhaltungen:
- EP-A- 0 664 246
- DE-A- 3 810 017
- GB-A- 2 253 135
- US-A- 4 502 178

## Beschreibung

Die Erfindung betrifft einen Wischarm einer Vorrichtung zum Wischen einer Scheibe eines Fahrzeuges, insbesondere einer Windschutzscheibe, gemäß dem Oberbegriff des Anspruchs 1.

Wischarme mit einer derartigen Einrichtung zur Arretierung in einer bestimmten Abklappstellung des Tragarmes gegenüber der zu wischenden Scheibe sind vor allem dann erforderlich, wenn aufgrund der Einbauverhältnisse am Fahrzeug nicht genügend Platz zur Verfügung steht, um den Tragarm für bestimmte Handhabungen so weit von der Scheibe abzuklappen, daß er über eine neutrale Wirkungslinie seiner Anpreßfeder hinweg in eine stabile Abklappstellung gelangt.

Ein Wischarm dieser Gattung ist bereits aus der DE 40 28 902 A1 und der DE 38 10 017 A1 bekannt. Dieser Wischarm besitzt einen Tragarm von im wesentlichen der Form eines in Richtung der zu wischenden Scheibe offenen Kanales, der von zwei voneinander beabstandeten, parallelen Seitenwangen und einem diese Seitenwangen verbindenden Rücken gebildet ist. Über ein Gelenk ist dieser Tragarm in einer auf der zu wischenden Scheibe stehenden Ebene schwenkbar mit einem Endabschnitt eines Befestigungsteiles verbunden, dessen voneinander beabstandete, parallelen Seitenwangen im Bereich des Gelenkes von den Seitenwangen des Tragarmes außen umfaßt werden. Dieser Tragarm ist mit einem Rastmittel zur Arretierung des Tragarmes in einer bestimmten Abklappstellung gegenüber der zu wischenden Scheibe ausgestattet. Als Rastmittel dient bei der DE 40 28 902 A1 ein separat hergestelltes Stützteil, welches nahe dem erwähnten Gelenk zwischen den Seitenwangen des Tragarmes angeordnet und an dem Rücken des Tragarmes befestigt ist. Das Stützteil weist eine Rastschulter auf, die beim Abheben des Wischblattes um einen bestimmten Betrag von der zu wischenden Scheibe mit einem an dem Befestigungsteil angebrachten Gegenrastmittel in Wirkverbindung tritt und den Tragarm in einer bestimmten Abklappstellung arretiert. Das Gegenrastmittel ist ein bolzenartiges Bauteil, welches verschiebbar in den Seitenwangen des Befestigungsteiles gelagert ist und durch eine vorgespannte Zugfeder im wesentlichen in Richtung auf die Rastschulter des am Tragarm befindlichen Stützteiles gezogen wird. Die Zugfeder ist im wesentlichen längs in dem kanalförmigen Tragarm angeordnet und dabei mit einem ersten Ende an dem Tragarm festgelegt und mit einem zweiten Ende auf dem bolzenförmigen Bauteil verhakt. An dieser Stelle sei besonders darauf hingewiesen, daß diese Zugfeder nichts mit irgendeiner Feder zu tun hat, welche die erforderliche Anpreßkraft für den Anlagedruck des Wischblattes auf der zu wischenden Scheibe erzeugt. Im Falle dieses bekannten Wischarmes wird diese Anpreßkraft von einer anderen, nicht näher beschriebenen Vorrichtung erzeugt.

Wenn nun ein Wischarm herkömmlicher Bauart, bei welchem die Anpreßkraft des Wischblattes gegen die zu wischende Scheibe von einer als Anpreßfeder wirkenden Zugfeder erzeugt wird, die mit einem Ende am Tragarm festgelegt ist und deren zweites Ende auf einem unterhalb des Gelenkes zwischen Befestigungsteil und Tragarm an dem Befestigungsteil angeordneten Federeinhängestift verhakt ist, mit einer Arretiervorrichtung des Tragarmes gemäß der DE 40 28 902 A1 ausgestattet werden soll, sind zusätzliche Bauteile erforderlich, die außerdem einen größeren Montageaufwand zur Folge haben. Dadurch wird ein solcher Wischarm teuer.

Bei der DE 38 10 017 A1 ist der Tragarm an seinem freien Ende mit Rastnocken versehen, die ihn in abgeklappter Stellung halten. Hierfür ist es erfoderlich, daß der Federverankerungsstift verschieblich gelagert ist. Hierfür bedarf es Langlöcher und der Stift muß mit seinen freien Enden verschieblich und verliersicher in den Langlöchern gelagert sein. Da der Federverankerungsstift mit seinen Enden lose in den Langlöchern gelagert ist, muß er entweder groß dimensioniert oder aus einem hochfesten Werkstoff sein, so daß er ohne durchzubiegen die Federkraft aufnehmen kann. Es muß außerdem festgestellt werden, daß sowohl Durchbrüche in den Seitenwangen des Befestigungsteiles als auch die bewegliche Lagerung des Federeinhängestiftes in dem Befestigungsteil mit verschiedenen funktionellen als auch ästhetischen Nachteilen behaftet ist.

Aufgabe der Erfindung ist es, einen Wischarm mit einer Vorrichtung zur Arretierung des Tragarmes in einer bestimmten Abklappstellung gegenüber der zu wischenden Scheibe zu entwickeln, der hinsichtlich seiner Konstruktion einfacher und preiswerter aufgebaut ist.

Erfindungsgemäß wird diese Aufgabe durch einen Wischarm gemäß Anspruch 1 gelöst.

Dadurch, daß ein mit dem am Befestigungteil vorgesehenen Gegenrastmittel beim Abheben des Wischblattes um ein bestimmtes Maß von der zu wischenden Scheibe in Wirkverbindung tretender Rastnocken direkt an den Tragarm des Wischarmes angeformt ist, wird bereits ein Bauteil und entsprechender Montageaufwand eingespart. Dieses eingesparte Bauteil gegenüber dem bekannten Wischarm ist das separat gefertigte Stützteil, welches am Rücken des Tragarmes befestigt ist.

Bei der Erfindung ist der bisher beschriebene Federeinhängestift anders, nämlich mehrteilig, ausgebildet. Ein Teil dieses Federeinhängestiftes ist nun eine Achse, die starr mit dem Befestigungsteil verbunden ist und dabei zwischen den Seitenwangen des Befestigungsteiles angeordnet ist. Das andere Teil dieses Federeinhängestiftes wird von einer Buchse gebildet, deren Innendurchmesser größer ist als der Durchmesser der Achse. Diese Buchse ist so auf der Achse gelagert, daß sich die Buchse gegenüber der Achse in dem durch ihre innere Mantelfläche bzw. durch ihren Innendurchmesser begrenzten Maß bewegen kann. Dabei kann die Buchse auch eine Drehbewegung gegenüber der Achse ausführen. Das zweite Ende der als Anpreßfeder dienenden Zugfeder, deren erstes Ende an dem Tragarm festgelegt ist, greift an der Buchse an und zieht diese in ihre Zugrichtung. Damit liegt die Buchse punktförmig bzw. linienförmig mit ihrer Innenseite an der Achse an und ist in Zugrichtung der Zugfeder, d.h. im wesentlichen in Längsrichtung des Tragarmes, vorgespannt. Der Innendurchmesser der Buchse ist dabei so groß, daß die nunmehr als Gegenrastmittel dienende Buchse unter der Wirkung der Rastnocken beim Abklappen des Tragarmes ausreichend weit in die Gegenrichtung ausweichen kann, um die Rastnocken passieren zu lassen. Nach dem Überrasten der Buchse durch die Rastnocken wird der Tragarm des Wischarmes durch die mittels der Zugfeder vorgespannte Buchse in einer durch die Lage der Rastnocken bestimmten Abklappstellung arretiert. Die Form der Rastnocken ist dabei in Anpassung an den Außendurchmesser der Buchse so gewählt, daß beim Zurückklappen des Tragarmes in die Arbeitsstellung die Rastnocken die Buchse in entgegengesetzter Richtung überrasten, wodurch die Arretierung selbsttätig gelöst wird. Diese Erfindung zeichnet sich durch eine besondere konstruktive Einfachheit und besonders große Funktionssicherheit aus. Außerdem wird sie auch höheren ästhetischen Anforderungen gerecht, da keine störenden offenen Durchbrüche für die Lagerung des Federeinhängestiftes in den Seitenwangen des Befestigungsteiles vorhanden sind. Die zu dem mehrteiligen Federeinhängestift gehörende Buchse wird hierbei in einfachster Weise entweder von einem geschlossenen Rohrstück entsprechender Länge oder von einem Blechstreifen gebildet, der zu einem Hohlzylinder gerollt ist, wobei zwei gegenüberliegende Ränder dieses Blechstreifens stumpf aneinander anstoßen.

Hierbei ist der von Wischarmen herkömmlicher Bauart bekannte Federeinhängestift für die am Tragarm angeordnete und mit einem Ende an diesem festgelegte Anpreßfeder gleichzeitig das Bauteil, welches als Gegenrastmittel für den bzw. die am Tragarm vorgesehenen Rastnocken dient. In diesem Fall ist außerdem die bei herkömmlichen Wischarmen als Anpreßfeder dienende Zugfeder, die mit ihrem zweiten Ende mit dem Federeinhängestift verbunden ist, diejenige Feder, welche das als Gegenrastmittel dienende Bauteil, nämlich den Federeinhängestift, in Richtung auf den oder die Rastnocken vorspannt. Der Federeinhängestift muß hierbei jedoch um einen bestimmten Betrag, im wesentlichen in Längsrichtung des Wischarmes, beweglich an dem Befestigungsteil gelagert sein. Der besondere Vorteil dieser Maßnahme der Erfindung besteht in einer weiteren Verringerung von erforderlichen Bauteilen und somit in einer weiteren konstruktiven Vereinfachung und einer Verbilligung des Wischarmes.

Als vorteilhaft wird hierbei eine Weiterbildung gemäß Anspruch 2 empfohlen, wonach der Rastnocken direkt an einen auf das am Befestigungsteil vorgesehene Gegenrastmittel weisenden Rand einer Seitenwange des Tragarmes angeformt ist. Dieser Rand der Seitenwange des Tragarmes liegt dem Gegenrastmittel am nächsten. Deshalb erfordert seine Herstellung nur sehr wenig zusätzliches Material und Herstellungsaufwand.

Der Herstellungsaufwand für den Rastnocken läßt sich bei einem aus Blech, vorzugsweise aus Stahlblech, gefertigten Tragarm durch eine Weiterbildung der Erfindung gemäß Anspruch 3 noch weiter verringern, indem das Anformen des Rastnockens durch entsprechendes Beschneiden des betreffenden Randes der Seitenwange des Tragarmes bzw. unmittelbar beim Ausstanzen des für den Tragarm bestimmten Blechzuschnittes erfolgt. Falls der Tragarm abweichend von der herkömmlichen Art und Weise als Gußteil hergestellt wird, kann der Rastnocken unmittelbar mit der Herstellung des Tragarmes gießtechnisch hergestellt werden. Hierzu bedarf der Fachmann keiner weiteren Erläuterung.

Eine Weiterbildung der Erfindung gemäß Anspruch 4 hat den wesentlichen Vorteil, daß die Funktionssicherheit der Arretierung des Tragarmes in der bestimmten Abklappstellung durch die zwei gleichzeitig wirkenden Rastnocken bedeutend erhöht wird.

Eine Weiterbildung der Erfindung gemäß Anspruch 5 geht davon aus, daß das Befestigungsteil zumindest in seinem dem Tragarm zugewandten Abschnitt, in welchem auch der Federeinhängestift angeordnet ist, zwei voneinander beabstandete Seitenwangen besitzt. Insbesondere ist dies dann der Fall, wenn das Befestigungsteil aus Blech, vorzugsweise Stahlblech, gefertigt ist und einen U-artigen Querschnitt mit zwei Seitenwangen und einem diese Seitenwangen verbindenden Rücken aufweist. In diesem Fall ist gemäß Anspruch 6 vorgesehen, daß der Federeinhängestift direkt in entsprechend geformten Ausnehmungen bzw. Durchbrüchen in den Seitenwangen des Befestigungsteiles beweglich gelagert und geführt ist und dabei im wesentlichen in der Wirkungsrichtung der Zugfeder vorgespannt ist.

Wenn hierbei außerdem in allgemein gebräuchlicher Art die Seitenwangen des Tragarmes die Seitenwangen des Befestigungteiles außen umfassen, wird eine Weiterbildung der Erfindung gemäß Anspruch 6 empfohlen, wonach der Federeinhängestift mit einem oder besser mit beiden Enden an den gegenüberliegenden Außenseiten der Außenwangen des Befestigungsteiles aus den Durchbrüchen, in denen er gelagert ist, herausragt. Damit ist es in konstruktiv einfacher Weise möglich, die herausragenden Enden des Federeinhängestiftes beim Abklappen des Tragarmes mit den Rastnocken an den Seitenwangen des Tragarmes in Wirkverbindung zu bringen.

Die Erfindung sieht vor, daß abweichend von der allgemein gebräuchlichen Bauart die Seitenwangen des Befestigungsteiles die Seitenwangen des Tragarmes außen umfassen. Eine solche Ausführung ermöglicht eine besonders flache Bauweise des Wischarmes für besonders beengte Einbauverhältnisse am Fahrzeug bei gleichzeitiger Gewährleistung der erforderlichen Stabilität des Wischarmes, insbesondere im Bereich des Gelenkes zwischen Befestigungsteil und Tragarm. Diese Weiterbildung gemäß Anspruch 8 eignet sich besonders gut für einen Wischarm, dessen Befestigungsteil und Tragarm als Stanz-Biegeteile aus Blech, insbesondere Stahlblech, hergestellt sind.

Vorteilhaft ist hierbei eine Weiterbildung gemäß Anspruch 7, wobei der Federeinhängestift mit seinen gegenüberliegenden Enden direkt in entsprechend geformten Ausnehmungen bzw. Durchbrüchen in den Seitenwangen des Befestigungsteiles gelagert und geführt ist und mit den Abschnitten, die den Innenseiten der Seitenwand des Befestigungsteiles unmittelbar benachbar sind, mit den Rastnocken des Tragarmes in Wirkverbindung bringbar ist.

Auch die Achse des mehrteilig ausgeführten Federeinhängestiftes kann verschieden ausgestaltet sein. Eine Weiterbildung gemäß Anspruch 8 sieht vor, daß die Achse von einem Stift bzw. Bolzen gebildet ist, der den Abstand zwischen den Seitenwangen des Befestigungsteiles überbrückt und an seinen gegenüberliegenden Enden starr mit den Seitenwangen des Befestigungsteiles verbunden ist. Diese Weiterbildung hat den besonderen Vorteil, daß durch den starr mit den Seitenwangen des Befestigungsteiles verbundenen Stift bzw. Bolzen die Stabilität des Befestigungsteiles zusätzlich erhöht wird, vor allem dann, wenn das Befestigungsteil als Blechteil hergestellt ist. Vorteilhaft für eine einfache Montage des Stiftes bzw. Bolzens ist es, wenn dieser in fluchtende Bohrungen in den Seitenwangen des Befestigungsteiles eingesteckt und durch Verstemmen oder Vernieten starr an den Seitenwangen befestigt ist. Es ist auch vorstellbar, daß bereits dadurch eine ausreichend stabile Befestigung erreicht wird, daß der Stift bzw. Bolzen gegenüber den fluchtenden Bohrungen in den Seitenwangen des Befestigungsteiles Übermaß aufweist und in diese Bohrungen eingepreßt ist.

Eine andere Weiterbildung gemäß Anspruch 9 sieht vor, daß die Achse des mehrteiligen Federeinhängestiftes von zwei Vorsprüngen gebildet wird, die jeweils von der Innenseite einer Seitenwange des Befestigungsteiles abstehen und miteinander fluchtend angeordnet sind. Diese Vorsprünge können bei einem aus Blech gefertigten Befestigungsteil bereits als entsprechende Materialausprägungen an den entsprechenden Stellen in den für die Herstellung des Befestigungsteiles bestimmten Blechzuschnitt eingearbeitet sein. Dadurch wird eine einfache Montage der Buchse zwischen den Seitenwangen dadurch möglich, daß diese Vorsprünge beim Biegen der Seitenwangen gegenüber dem sie verbindenden Rücken in die gegenüberliegenden Enden der Buchse eintauchen.

Durch eine Weiterbildung gemäß Anspruch 10, wonach die Vorsprünge, welche die Achse des mehrteiligen Federeinhängestiftes bilden, eine zylindrische Kontur aufweisen, wird eine günstige Lagerung der Buchse auf den zylindrischen Lagerzapfen erreicht. Durch die zylindrische Kontur der Lagerzapfen wird verhindert, daß durch die vorgespannte Buchse eine Kraftkomponente in axialer Richtung der Zapfen wirken kann, welche die Seitenwangen des Befestigungsteiles auseinanderdrücken könnte.

Für eine noch weiter verbesserte Stabilität der Arretierung des Tragarmes in seiner Abklappstellung wird eine Weiterbildung gemäß Anspruch 11 vorgeschlagen. Dementsprechend ist, bezogen auf die Abklappbewegung des Tragarmes, vorgesehen, daß hinter den Rastnocken in die auf die Buchse weisenden Ränder der Seitenwangen des Tragarmes jeweils eine Vertiefung eingearbeitet ist, in welche die Buchse eintauchen kann. Die Vertiefung ist dabei an den Außendurchmesser der Buchse angepaßt.

Von Vorteil ist außerdem eine Weiterbildung gemäß Anspruch 12, welche vorsieht, daß sich die Buchse über den gesamten Abstand zwischen den Seitenwangen des Befestigungsteiles erstreckt und mit ihren gegenüberliegenden Stirnseiten an den Innenseiten der Seitenwangen des Befestigungsteiles geführt ist. Damit sind ein einfacher konstruktiver Aufbau und eine einfache Montage sowie eine zwangsweise Positionierung der Buchse in axialer Richtung gegeben.

Um die Zugfeder in einfacher Weise funktional mit der Buchse zu verbinden, sieht eine Weiterbildung gemäß Anspruch 13 vor, daß das zweite Ende der Zugfeder entweder direkt als Haken ausgebildet und auf dem Umfang des beweglichen Federeinhängestiftes bzw. auf dem Umfang der zu einem mehrteiligen Federeinhängestift gehörenden beweglichen Buchse verhakt ist oder daß an das zweite Ende der Zugfeder über einen separaten Federhaken auf dem Umfang des Federeinhängestiftes bzw. der Buchse verhakt ist.

Eine Weiterbildung der Erfindung gemäß Anspruch 6 bietet den Vorteil, daß der Wischarm in einer möglichst flachen Bauweise ausführbar ist, die nicht dadurch gestört wird, daß das zweite Ende der Zugfeder bzw. ein entsprechender separater Federhaken in Richtung auf die zu wischende Scheibe über die Unterseite von Befestigungsteil bzw. Tragarm des Wischarmes hervorsteht.

Durch eine vorteilhafte Weiterbildung der Erfindung gemäß Anspruch 15 wird erreicht, daß die Zugkraft der Zugfeder gleichmäßig auf die Abschnitte des Federeinhängestiftes bzw. der zu dem Federeinhängestift gehörenden Buchse verteilt wird, welche in Abklappstellung des Tragarmes mit den an den Seitenwangen des Tragarmes befindlichen Rastnocken zusammenwirken. Diese Maßnahme wirkt sich günstig auf die Funktionssicherheit der Rastvorrichtung aus und verhindert einen ungüngstigen einseitigen Verschleiß des Federeinhängestiftes bzw. der Buchse oder nur eines Rastnockens. Durch einen solchen ungleichmäßigen Verschleiß könnte sich eine ungewünschte, verfrühte Verringerung der Funktionssicherheit der Rastvorrichtung einstellen.

An einem Ausführungsbeispiel wird die Erfindung nachfolgend näher erläutert. In den zugehörigen Zeichnungen zeigen:
- Fig. 1: einen Wischarm in perspektivischer und teilweise geschnittener Darstellung,
- Fig. 2: in vergrößerter Schnittdarstellung einen Ausschnitt des Wischarmes von Fig. 1 und
- Fig. 3: den Ausschnitt des Wischarmes von Fig. 2, jedoch in Abklappstellung des Tragarmes.

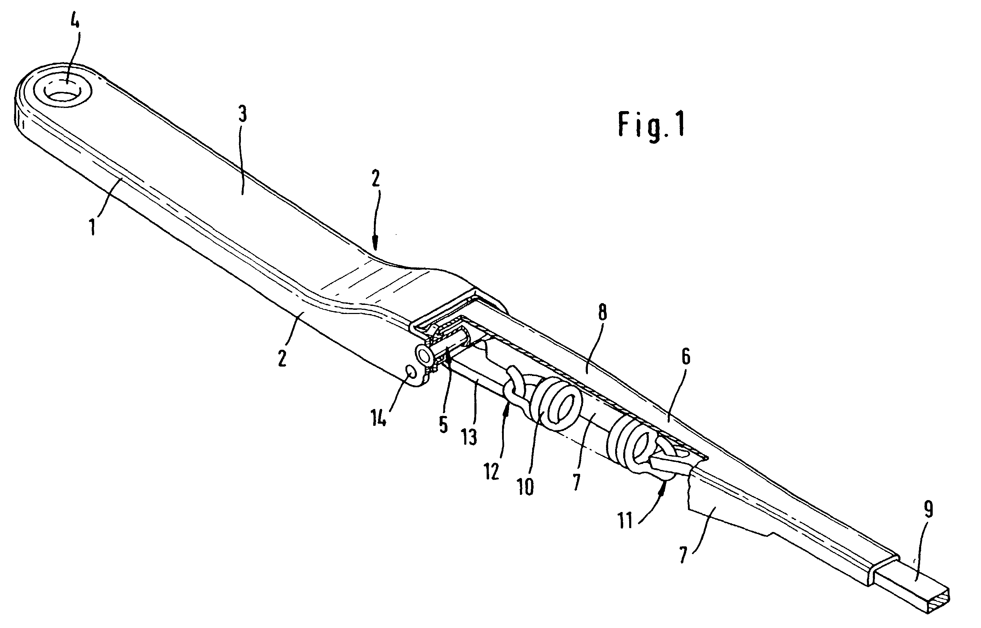

Der in Fig.1 dargestellte Wischarm einer Scheibenwischvorrichtung für die Windschutzscheibe eines Kraftfahrzeuges weist ein Befestigungsteil 1 auf, welches als Stanz-Biegeteil aus Stahlblech gefertigt ist. Das Befestigungsteil 1 besitzt eine langgestreckte Form und hat im wesentlichen einen flachen U-artigen Querschnitt, der von den zwei voneinander beabstandeten Seitenwangen 2 und einem diese Seitenwangen 2 verbindenden Rücken 3 gebildet ist. Die offene Seite des U-artigen Querschnittes des Befestigungsteiles ist bei am Fahrzeug angebautem Wischarm auf die zu wischende Scheibe gerichtet. Um den Wischarm drehfest auf einer pendelnd antreibbaren Wischerwelle befestigen zu können, ist das Befestigungsteil 1 an einem Ende mit einer entsprechenden Aufnahmeöffnung 4 für eine Wischerwelle ausgestattet. Die Art und Weise der Befestigung eines Wischarmes auf einer Wischerwelle ist dem Fachmann hinreichend bekannt und muß an dieser Stelle nicht näher erläutert werden. An dem der Aufnahmeöffnung 4 gegenüberliegenden Endabschnitt ist mit dem Befestigungsteil 1 über ein Gelenk 5 ein Tragarm 6 verbunden, wobei der Tragarm 6 gegenüber dem Befestigungsteil 1 in einer Ebene schwenkbar ist, die auf der nicht dargestellten zu wischenden Scheibe steht. Der Tragarm 6 ist ebenfalls ein als Stanz-Biegeteil aus Stahlblech hergestelltes Bauteil mit einem im wesentlichen U-förmigen Querschnitt, der von zwei voneinander beabstandeten Seitenwangen 7 und einem diese Seitenwangen miteinander verbindenden Rücken 8 gebildet ist. An dem Ende des Tragarmes 6, welches dem Gelenk 5 gegenüberliegt, ist eine Wischstange 9 befestigt, welche an ihrem nicht dargestellten freien Ende so ausgebildet ist, daß sie mit einem Wischblatt verbindbar ist.

In Fig. 1 ist zu erkennen, daß im Bereich des Gelenkes 5 die Seitenwangen 2 des Befestigungsteiles 1 die Seitenwangen 7 des Tragarmes 6 außen umfassen. Das Gelenk 5 wird dabei im wesentlichen von einem Gelenkbolzen gebildet, welcher in miteinander fluchtend angeordneten Bohrungen der Seitenwangen 2 des Befestigungsteiles 1 und der Seitenwangen 7 des Tragarmes 6 gelagert ist. Eine Zugfeder 10 ist in Längsrichtung des Tragarmes 6 innerhalb dessen nach unten offenen U-förmigen Querschnittes gelagert. Mit ihrem ersten Ende 11 ist die Zugfeder an dem Tragarm 6 festgelegt, was in diesem Fall dadurch realisiert ist, daß das hakenförmig ausgebildete erste Ende 11 der Zugfeder 10 in eine Öffnung am inneren Ende der Wischstange 9 eingehakt ist. Das zweite Ende 12 der Zugfeder 10 ist über einen separaten Federhaken 13 auf einem Federeinhängestift 14 verhakt, der unterhalb des Gelenkes 5 an den Seitenwangen 2 des Befestigungsteiles 1 befestigt ist.

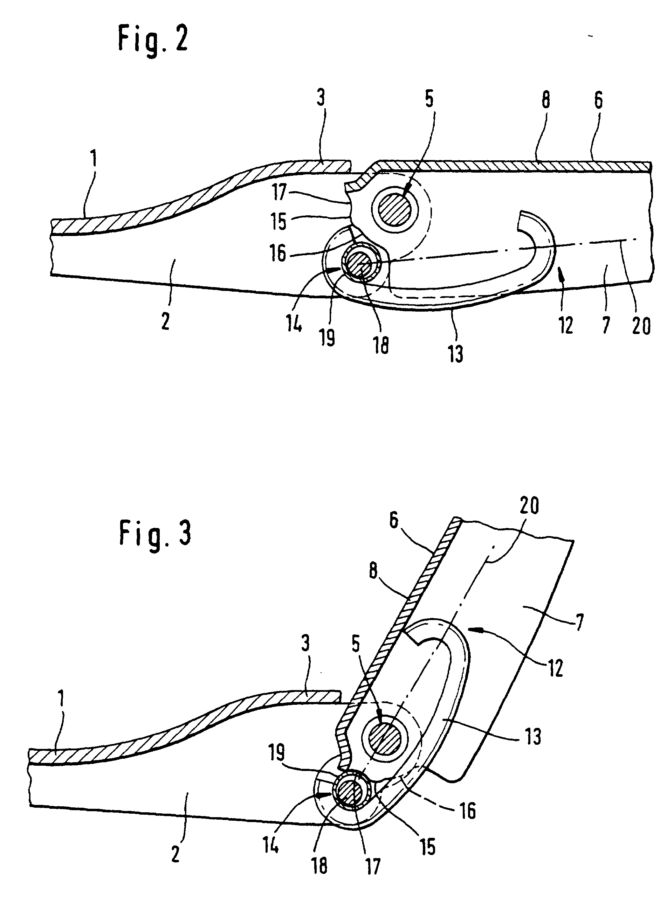

Der in Fig. 1 dargestellte Wischarm ist weiterhin mit einer Vorrichtung ausgestattet, die den Tragarm6 in einer bestimmten Abklappstellung gegenüber der zu wischenden Scheibe arretiert, wobei diese Abklappstellung einen kleineren Abklappwinkel aufweist als diejenige Abklappstellung, in welcher sich die Wirkungslinie der Zugfeder 10 in einer Neutralstellung befindet. Diese Vorrichtung zur Arretierung des Tragarmes 6 in einer bestimmten Abklappstellung ist in den Fig. 2 und 3 näher dargestellt.

Die Vorrichtung, welche den Tragarm 6 in der aus Fig. 3 ersichtlichen Abklappstellung gegenüber der zu wischenden Scheibe arretiert, besteht aus Rastmitteln, die am Tragarm 6 vorgesehen sind und aus einem Gegenrastmittel, welches am Befestigungsteil 1 vorgesehen ist. Aus den Fig. 2 und 3 ist ersichtlich, daß die Rastmittel entsprechende Rastnocken 15 sind, mit denen der Tragarm 6 ausgestattet ist. Diese Rastnocken 15 sind jeweils direkt an eine Seitenwange 7 des Tragarmes 6 angeformt und zwar direkt an denjenigen Rand 16 der Seitenwange 7, welcher in Richtung auf den Federeinhängestift 14 weist. Da der Tragarm 6 als Stanz-Biegeteil aus Stahlblech hergestellt ist, sind die Rastnocken 15 in einfachster Weise direkt beim Ausstanzen des Blechzuschnittes für den Tragarm 6 mit hergestellt worden. Bezogen auf die Abklappbewegung des Tragarmes 6 ist jeweils hinter dem Rastnocken 15 eine kreisbogenförmige Vertiefung 17 in den Rand 16 der Seitenwangen 7 eingearbeitet. Um den Tragarm 6 zuverlässig in der gewünschten Abklappstellung arretieren zu können, wirken die Rastnocken 15 und die Vertiefungen 17, welche miteinander fluchtend an die Ränder 16 der Seitenwangen 7 angeformt sind, mit dem als Gegenrastmittel ausgebildeten Federeinhängestift 14 zusammen.
Im vorliegenden Fall ist der Federeinhängestift 14 mehrteilig ausgeführt. Er besteht aus einer Achse 18, die starr an den beiden Seitenwangen 2 des Befestigungsteiles 1 befestigt ist. Dabei wird die Achse 18 von einem zylindrischen Bolzen gebildet, der mit seinen Enden in fluchtenden Bohrungen in den Seitenwangen 2 des Befestigungsteiles 1 gelagert und durch Verstemmen bzw. Vernieten an den Seitenwangen 2 des Befestigungsteiles 1 starr befestigt ist. Auf dieser starren Achse 18 ist beweglich eine Buchse 19 gelagert, die von einem umfangsseitig geschlossenen Rohrstück gebildet ist, welches einen Innendurchmesser aufweist, der größer ist als der Außendurchmesser der Achse 18. Diese Buchse 19 erstreckt sich über den gesamten Abstand zwischen den Seitenwangen 2 des Befestigungsteiles 1, so daß sie mit ihren gegenüberliegenden Stirnseiten an den Innenseiten der Seitenwangen 2 geführt ist. Die Buchse 19 ist also in axialer Richtung nicht verschiebbar. Die Bewegungsfreiheit der Buchse 19 auf der Achse 18 ist in dem Maß gegeben, in welchem der Innendurchmesser der Buchse 19 größer ist als der Außendurchmesser der starren Achse 18. Dabei ist auch eine Drehbewegung der Buchse 19 gegenüber der starren Achse 18 möglich.

In den Fig. 2 und 3 ist zu erkennen, daß der separate Federhaken 13, mit welchem das zweite Ende 12 der in den Fig. 2 und 3 nicht dargestellten Zugfeder 10 verbunden ist, auf dem Umfang der Buchse 19 verhakt ist. Dadurch wird die Buchse 19 in Zugrichtung der Zugfeder 10, d.h. in Richtung der Wirkungslinie 20 der Zugfeder 10, auf die Ränder 16 der Seitenwangen 7 des Tragarmes 6 zu gezogen und damit in dieser Richtung vorgespannt. Bei der in Fig. 2 dargestellten Arbeitsstellung des Wischarmes ist diese Vorspannung der Buchse 19 ohne jegliche Bedeutung, da die Buchse 19, welche das Gegenrastmittel zu den Rastnocken 15 darstellt, nicht in Wirkverbindung mit diesen Rastnocken 15 oder den Rändern 16 an den Seitenwangen 7 des Tragarmes 6 steht. In dieser Arbeitsstellung wirkt die Zugfeder 10 ausschließlich als Anpreßfeder des Wischarmes.

Erst dann, wenn das Wischblatt von der zu wischenden Scheibe abgehoben wird, um beispielsweise die Fahrzeugscheibe manuell zu reinigen oder das Wischblatt auszutauschen, gelangen die Ränder 16 bzw. die Rastnocken 15 in Wirkverbindung mit dem Gegenrastmittel, welches durch die vorgespannte Buchse 19 gebildet ist. Durch die Abklappbewegung des Tragarmes 6 drücken die Rastnocken 15 zunächst gegen die federbelastete Buchse 19 und zwingen diese in die Gegenrichtung auszuweichen. Nach dem Überrasten der Buchse 19 durch die Rastnocken 15 wird die Buchse 19 in die hinter den Rastnocken 15 angeordneten Vertiefungen 17 gezogen, deren Bogenform an die Buchse 19 angepaßt ist. Die Buchse 19 taucht also um einen Betrag in diese Vertiefungen 17 ein. Unter der Zugkraft der Zugfeder 10 wird dabei die Buchse 19 mit ihren betreffenden Abschnitten so stark in die hinter den Rastnocken 15 angeordneten Vertiefungen 17 gezogen, daß der Tragarm 6 in dieser erreichen Abklappstellung sicher arretiert wird. Um die Arretierung des Tragarmes 6 wieder aufzuheben, wird der Tragarm 6 einfach wieder in seine Arbeitsstellung gemäß Fig. 2 zurückgeschwenkt. Die Rastnocken 15 sind so geformt, daß sie beim Zurückschwenken des Tragarmes 6 wiederum die Buchse 19 entgegen der Zugrichtung der Zugfeder 10 vorübergehend federelastisch auslenken, bis die Rastnocken 15 die vorgespannte Buchse 19 überwunden haben. Nach diesem Überwinden der Buchse 19 durch die Rastnocken 15 wird die Wirkverbindung zwischen den Rastnocken 15 bzw. den Rändern 16 und der Buchse 19 aufgehoben, so daß diese in keiner Weise die erforderliche Verschwenkbarkeit des Tragarmes 6 gegenüber dem Befestigungsteil 1 behindern.

## Patentansprüche

1. Wischarm einer Vorrichtung zum Wischen einer Scheibe eines Fahrzeuges, insbesondere einer Windschutzscheibe, mit einem Befestigungsteil (1), das drehfest auf einer pendelnd antreibbaren Welle befestigbar ist, und mit einem Tragarm (6), der über ein Gelenk (5) so mit dem Befestigungsteil (1) verbunden ist, daß der Tragarm (6) in einer auf der zu wischenden Scheibe stehenden Ebene schwenkbar ist, wobei der Tragarm (6) zumindest an seinem dem Befestigungsteil (1) zugewandten Endabschnitt zwei voneinander beabstandete Seitenwangen (7) aufweist und der Tragarm (6) mit einem Wischblatt verbindbar ist, und wobei der Tragarm (6) mit Rastmitteln und das Befestigungsteil mit Gegenrastmitteln in Form eines im wesentlichen in Längsrichtung des Wischarmes beweglich an dem Befestigungsteil (1) gelagerten und durch eine Feder gegen das Rastmittel des Tragarmes (6) vorgespannten Bauteiles ausgestattet sind, welche zusammenwirken und den Tragarm (6) in einer bestimmten Abklappstellung arretieren, wenn das Wischblatt um ein bestimmtes Maß von der zu wischenden Scheibe abgehoben ist, und die so gestaltet sind, daß beim Zurückschwenken des Tragarmes (6) in die Arbeitsstellung des Wischblattes die Arretierung selbsttätig gelöst wird, wobei das beim Abheben des Wischblattes um ein bestimmtes Maß von der zu wischenden Scheibe mit dem am Befestigungsteil (1) vorgesehenen Gegenrastmittel in Wirkverbindung bringbare und den Tragarm (6) in einer bestimmten Abklappstellung gegenüber der zu wischenden Scheibe arretierende Rastmittel ein direkt an den Tragarm (6) des Wischarmes angeformter Rastnocken (15) ist, wobei daß das als Gegenrastmittel dienende Bauteil derjenige Federeinhängestift (14) ist, an dem das zweite Ende (12) einer zugfeder (10) angreift, deren erstes Ende (11) an dem Tragarm (6) festgelegt ist und welche gleichzeitig den Tragarm (6) gegen die zu wischende Scheibe zieht und somit für die erforderliche Anpreßkraft des Wischblattes gegen die zu wischende Scheibe sorgt, **dadurch gekennzeichnet, daß** die Seitenwangen (2) des Befestigungsteiles (1) die Seitenwangen (7) des Tragarmes (6) außen umfassen und daß der Federeinhängestift (14) mehrteilig ausgeführt ist und aus einer starr mit dem Befestigungsteil (1) verbundenen Achse (18), die zwischen den Seitenwangen (2) des Befestigungsteiles (1) angeordnet ist, und einer beweglich auf dieser Achse (18) gelagerten Buchse (19) gebildet ist, deren Durchmesser größer ist als der Außendurchmesser der Achse (18), und daß das zweite Ende (12) der Zugfeder (10) an der Buchse (19) angreift und diese in Zugrichtung der Zugfeder (10) vorspannt.

2. Wischarm nach Anspruch 1, **dadurch gekennzeichnet, daß** der Rastnocken (15) direkt an einen auf das als Gegenrastmittel wirkende Bauteil weisenden Rand (16) einer Seitenwange (7) des Tragarmes (6) angeformt ist.

3. Wischarm nach Anspruch 2, wobei der Tragarm (6) zumindest in dem mit dem Befestigungsteil (1) verbundenen Abschnitt aus Blech, vorzugsweise aus Stahlblech, besteht, **dadurch gekennzeichnet, daß** das Anformen des Rastnockens (15) durch Beschneiden des betreffenden Randes (16) der Seitenwange (7) bzw. direkt beim Stanzen des betreffenden Blechzuschnittes für den Tragarm (6) erfolgt ist.

4. Wischarm nach einem der vorhergehenden Ansprüche, **dadurch gekennzeichnet, daß** an die betreffenden Ränder (16) beider Seitenwangen (7) des Tragarmes (6) jeweils ein Rastnocken (15) angeformt ist, wobei die Rastnocken (15) so miteinander fluchten, daß sie gleichzeitig mit dem Gegenrastmittel in Wirkverbindung gelangen.

5. Wischarm nach einem der vorhergehenden Ansprüche, **dadurch gekennzeichnet, daß** das Befestigungsteil (1) zumindest in dem dem Tragarm (6) zugewandten Abschnitt zwei voneinander beabstandete Seitenwangen (2) aufweist und daß der Federeinhängestift (14) direkt in entsprechenden Ausnehmungen bzw. Durchbrüchen der Seitenwangen (2) des Befestigungsteiles (1) beweglich gelagert und geführt ist und im wesentlichen in der Wirkungsrichtung der Zugfeder (10) vorgespannt ist.

6. Wischarm nach Anspruch 5, wobei die Seitenwangen (7) des Tragarmes (6) die Seitenwangen (2) des Befestigungsteiles (1) außen umfassen, **dadurch gekennzeichnet, daß** der Federeinhängestift (14) mit einem bzw. mit beiden Enden an den Außenseiten der Seitenwangen (2) des Befestigungsteiles (1) herausragt und daß das herausragende Ende bzw. die herausragenden Enden des Federeinhängestiftes (14) durch Abklappen des Tragarmes (6) von der zu wischenden Scheibe mit dem bzw. den Rastnocken (15) an dem Tragarm (6) in Wirkverbindung bringbar sind.

7. Wischarm nach einem der vorhergehenden Ansprüche, **dadurch gekennzeichnet, daß** der Federeinhängestift (14) mit seinen gegenüberliegenden Enden direkt in entsprechenden Ausnehmungen bzw. Durchbrüchen der Seitenwangen (2) des Befestigungsteiles (1) beweglich gelagert und geführt ist und mit den Abschnitten, die den Innenseiten der Seitenwangen (2) benachbart sind, mit den Rastnocken (15) des Tragarmes (6) in Wirkverbindung bringbar ist.

8. Wischarm nach einem der vorhergehenden Ansprüche, **dadurch gekennzeichnet, daß** die Achse (18) von einem Stift bzw. Bolzen gebildet ist, der den Abstand zwischen den Seitenwangen (2) des Befestigungsteiles (1) überbrückt und an seinen gegenüberliegenden Enden starr mit den Seitenwangen (2) des Befestigungsteiles (1) verbunden ist.

9. Wischarm nach einem der vorhergehenden Ansprüche, **dadurch gekennzeichnet, daß** die Achse (18) von jeweils einem von der Innenseite einer Seitenwange (2) des Befestigungsteiles (1) abstehenden Vorsprung gebildet ist, wobei diese Vorsprünge miteinander fluchtend angeordnet sind.

10. Wischarm nach Anspruch 9, **dadurch gekennzeichnet, daß** die Vorsprünge, welche die Achse (18) des mehrteiligen Federeinhängestiftes (14) bilden, eine zylindrische Kontur aufweisen.

11. Wischarm nach einem der vorhergehenden Ansprüche, **dadurch gekennzeichnet, daß**, bezogen auf die Abklappbewegung des Tragarmes (6), hinter dem Rastnocken (15) eine Vertiefung (17) in den Rand (16) der Seitenwange (17) des Tragarmes (6) eingearbeitet ist, in welche die Buchse (19) zumindest teilweise eintauchen kann und die an den Außendurchmesser der Buchse (19) angepaßt ist.

12. Wischarm nach einem der vorhergehenden Ansprüche, **dadurch gekennzeichnet, daß** sich die Buchse (19) über den gesamten Abstand zwischen den Seitenwangen (2) des Befestigungsteiles (1) erstreckt und mit ihren gegenüberliegenden Stirnseiten an den Innenseiten der Seitenwangen (2) des Befestigungsteiles (1) geführt ist.

13. Wischarm nach einem der vorhergehenden Ansprüche, **dadurch gekennzeichnet, daß** das zweite Ende (12) der Zugfeder (10) direkt als Haken ausgebildet ist oder über einen separaten Federhaken (13) auf dem Umfang der Buchse (19) verhakt ist.

14. Wischarm nach Anspruch 13, **dadurch gekennzeichnet, daß** das direkt als Haken ausgebildete zweite Ende (12) der Zugfeder (10) bzw. der separate Federhaken (13) so flach ausgebildet ist, daß er nicht in Richtung auf die zu wischende Scheibe über die Unterseite von Befestigungsteil (1) bzw. Tragarm (6) hervorsteht.

15. Wischarm nach einem der vorhergehenden Ansprüche, **dadurch gekennzeichnet, daß** das zweite Ende (12) der Zugfeder (10) bzw. der Federhaken (13) mittig auf dem Federeinhängestift (14) bzw. auf der Buchse (19) fixiert ist.

## Claims

1. A wiper arm of a device for wiping a window of a vehicle, in particular a windshield, having a fastening element (1), which can be fastened, fixed against relative rotation, on a shaft which can be driven in a back-and-forth movement, and having a support arm (6), which is connected via a hinge (5) with the fastening element (1) in such a way, that the support arm can be pivoted in a plane extending on the window to be wiped, wherein the support arm (6) has, at least in the end section facing the fastening element (1), two lateral cheeks (7), which are spaced apart from each other, and wherein the support arm (6) is equipped with detent means, and the fastening element with counter-fastening means, in the form of a component, which is essentially seated, movable in the longitudinal direction of the wiper arm, on the fastening element (1), and is prestressed against the detent means of the support arm (6) by means of a spring, which work together and arrest the support arm (6) in a defined flipped-away position when the wiper blade has been lifted off the window to be wiped, and which is designed in such a way that, when the support arm (6) is pivoted back into the work position of the wiper blade, the arrestment is automatically released, wherein the detent means, which can be lifted off the window to be wiped by a defined amount and can be brought into operative contact with the counter- detent means, which are provided on the fastening element (1) and arrest the support arm (6) in a defined flipped-away position from the window to be wiped, are a detent cam (15), formed directly on the support arm (5), wherein the component being used as counter- detent means is the spring suspension pin (14), which is engaged by the second end (12) of a tension spring (10), whose first end (11) is fixed in place on the support arm (6), and which simultaneously pulls the support arm (6) against the window to be wiped and in this way provides the required contact pressure force for the wiper blade against the window to be wiped, **characterized in that** the lateral cheeks (2) of the fastening element (1) extend around the outside of the lateral cheeks (7) of the support arm (6), and that the spring suspension pin (14) is embodied in several sections and is formed by a shaft (18), which is rigidly connected with the fastening element (1) and is arranged between the lateral cheeks (2) of the fastening element (1), and a bushing (19), which is movably seated on this shaft (18) and whose diameter is greater than the exterior diameter of the shaft (18), and that the second end (12) of the tension spring (10) acts on the bushing (19) and prestresses it in the pulling direction of the tension spring (10).

2. The wiper arm in accordance with claim 1, **characterized in that** the detent cam (15) is formed directly on an edge (16), which points toward the component acting as counter-detent means, of the lateral cheek (7) of the support arm (6).

3. The wiper arm in accordance with claim 2, wherein at least the section of the support arm (6) connected with the fastening element (1) is made of sheet metal, preferably sheet steel, **characterized in that** the forming of the detent cam (15) has been performed by cutting the respective edge (16) of the lateral cheek (7), or directly in the course of punching out the respective sheet metal blank for the support arm (6).

4. The wiper arm in accordance with one of the preceding claims, **characterized in that** respectively one detent cam (15) is formed on the respective edges (16) of both lateral cheeks (7) of the support arm (6), wherein the detent cams (15) are aligned with each other in such a way that they simultaneously come into operative contact with the counter-detent means.

5. The wiper arm in accordance with one of the preceding claims, **characterized in that** the fastening element (1) has, at least on the section facing the support arm (6), two lateral cheeks (2), which are spaced apart from each other, and that the spring suspension pin (14) is movably seated and guided directly in appropriate recesses, or openings, of the lateral cheeks (2) of the fastening element (1) and is essentially prestressed in the effective direction of the tension spring (10).

6. The wiper arm in accordance with claim 5, wherein the lateral cheeks (7) of the support arm (6) extend over the exterior of the lateral cheeks (2) of the fastening element (1), **characterized in that** one, or respectively two, ends of the spring suspension pin (14) project from the outsides of the lateral cheeks (2) of the fastening element (1), and that the projecting end, or ends, of the spring suspension pin (14) can be brought into operative contact with the detent cam(s) (15) on the support arm (6) by flipping the support arm (6) away from the window to be wiped.

7. The wiper arm in accordance with one of the preceding claims, **characterized in that** the opposite ends of the spring suspension pin (14) are movably seated and guided directly in corresponding recesses, or openings, of the lateral cheeks (2) of the fastening element (1) and, by means of the sections adjoining the insides of the lateral cheeks (2), can be brought into operative contact with the detent cams (15) of the support arm (6).

8. The wiper arm in accordance with one of the preceding claims, **characterized in that** the shaft (18) is constituted by a pin, or bolt, which bridges the distance between the lateral cheeks (2) of the fastening element (1), and whose opposite ends are rigidly connected with the lateral cheeks (2) of the fastening element (1).

9. The wiper arm in accordance with one of the preceding claims, **characterized in that** the shaft (18) is formed by respectively one protrusion projecting away from the inside of a lateral cheek (2) of the fastening element (1), wherein these protrusions are arranged aligned with each other.

10. The wiper arm in accordance with claim 9, **characterized in that** the protrusions constituting the shafts (18) of the multi-section spring suspension pin (14) have a cylindrical contour.

11. The wiper arm in accordance with one of the preceding claims, **characterized in that** a depression (17) has been cut into the edge (16) of the lateral cheek (17) of the support arm (6), in relation to the flip-away movement of the support arm (6) behind the detent cam (15).

12. The wiper arm in accordance with one of the preceding claims, **characterized in that** the bushing (19) extends over the entire distance between the lateral cheeks (2) of the fastening element (1), and its opposite front ends are guided on the insides of the lateral cheeks (2) of the fastening element (1).

13. The wiper arm in accordance with one of the preceding claims, **characterized in that** the second end (12) of the tension spring (10) is directly embodied as a hook, or is hooked on the circumference of the bushing (19) by means of a separate spring hook (13).

14. The wiper arm in accordance with claim 13, **characterized in that** the second end (12) of the tension spring (10), which is directly embodied as a hook, or the separate spring hook (13), are embodied flat in such a way that, in the direction of the window to be wiped, they do not protrude past the underside of the fastening element (1), or of the support arm (6).

15. The wiper arm in accordance with one of the preceding claims, **characterized in that** the second end (12) of the tension spring (10), or the spring hook (13), are fixed in place centered on the spring suspension pin (14), or on the bushing (19).

## Revendications

1. Bras d'essuie-glace d'un dispositif pour essuyer une vitre d'un véhicule, notamment un pare-brise, comportant une partie de fixation (1), qui peut être fixée solidairement en rotation à un arbre pouvant être entraîné selon un mouvement pendulaire, et comportant un bras de support (6) qui est relié au moyen d'une articulation (5) à la partie de fixation (1) de telle sorte que le bras de support (6) peut pivoter dans un plan situé sur la vitre à nettoyer, et dans lequel le bras de support (6) possède au moins sur sa partie d'extrémité tournée vers la partie de fixation (1), deux flasques latéraux (7) distants l'un de l'autre, et le bras de support (6) peut être relié à une raclette, et dans lequel le bras de support (6) est pourvu de moyens d'encliquetage et la partie de fixation est pourvue de moyens d'encliquetage antagonistes se présentant sous la forme d'un composant, qui est monté sur la partie de fixation (1) de manière à être déplaçable sensiblement dans la direction longitudinale du bras d'essuie-glace et est précontraint par un ressort à l'encontre du moyen d'encliquetage du bras de support (6), ces moyens d'encliquetage et ces moyens d'encliquetage antagonistes coopérant et retenant le bras de support (6) dans une position rabattue prédéterminée, lorsque la raclette d'essuie-glace est écartée d'une certaine distance de la vitre à essuyer et étant agencés de telle sorte que lors du pivotement de retour du bras de support (6) dans la position de travail de la raclette, le blocage est supprimé automatiquement, et dans lequel les moyens d'encliquetage qui, lorsque la raclette d'essuie-glace s'écarte d'une distance déterminée de la vitre à essuyer, peuvent être amenés à coopérer avec les moyens d'encliquetage antagonistes prévus sur la partie de fixation (1) et bloquent le bras de support (6) dans une position de rabattement déterminée par rapport à la vitre à essuyer, sont constitués par une came d'encliquetage (15) formée directement sur le bras de support (6) du bras d'essuie-glace, et dans lequel le composant utilisé comme moyens d'encliquetage antagonistes est la tige (14) d'accrochage d'un ressort, à laquelle est accrochée la seconde extrémité (12) d'un ressort de traction (10), dont la première extrémité (11) est fixée au bras de support (6) et qui tire simultanément le bras de support (6) contre la vitre à essuyer et par conséquent assure la production de la force de serrage nécessaire de la raclette d'essuie-glace contre la vitre à essuyer, **caractérisé en ce que** les flasques latéraux (2) de la partie de fixation (1) entourent extérieurement les flasques latéraux (7) du bras de support (6) et que la tige (14) d'accrochage du ressort est formée de plusieurs éléments et est constituée par un axe (18), qui est relié rigidement à la partie de fixation (1) et est disposé entre les flasques latéraux (2) de la partie de fixation (1), et par une douille (19) montée de manière à être déplaçable sur cet axe (18) et dont le diamètre est supérieur au diamètre extérieur de l'axe (18), et que la seconde extrémité (12) du ressort de traction (10) est accrochée à la douille (19) et précontraint cette dernière dans la direction de traction du ressort de traction.

2. Bras d'essuie-glace selon la revendication 1, **caractérisé en ce que** l'ergot d'encliquetage (15) est formé directement sur un bord (16) d'un flasque latéral (7) du bras de support (6), qui est dirigé sur le composant qui agit en tant que moyens d'encliquetage.

3. Bras d'essuie-glace selon la revendication 2, **caractérisé en ce que** le bras de support (6) est constitué, au moins dans la partie reliée à la partie de fixation (1), par une tôle, de préférence une tôle d'acier, **caractérisé en ce que** le formage de la came d'encliquetage (15) est réalisé par découpage du bord concerné (16) du flasque latéral (7) ou directement lors du découpage du flan de tôle considéré pour le bras de support (6).

4. Bras d'essuie-glace selon l'une des revendications précédentes, **caractérisé en ce qu'**une came d'encliquetage respective (15) est formée sur les bords considérés (16) des deux flasques latéraux (7) du bras de support (6), les cames d'encliquetage (15) étant alignées entre elles de telle sorte qu'elles coopèrent simultanément avec les moyens d'encliquetage antagonistes.

5. Bras d'essuie-glace selon l'une des revendications précédentes, **caractérisé en ce que** la partie de fixation (1) comporte, au moins dans la partie tournée vers le bras de support (6), deux flasques latéraux (2) distants l'un de l'autre, et que la tige (14) d'accrochage du ressort est montée de manière à être déplaçable et est guidée directement dans des évidements ou passages correspondants des flasques latéraux (2) de la partie de fixation (1) et est précontrainte essentiellement dans la direction d'action du ressort de traction (10).

6. Bras d'essuie-glace selon la revendication 5, dans lequel les flasques latéraux (7) du bras de support (6) entourent extérieurement les flasques latéraux (2) de la partie de fixation (1), **caractérisé en ce que** la tige (14) d'accrochage du ressort fait saillie, par une extrémité ou par ses deux extrémités sur les côtés extérieurs des flasques latéraux (2) de la partie de fixation (1) et que l'extrémité saillante ou les extrémités saillantes de la tige de fixation (14) peuvent être amenées à coopérer, par écartement du bras de support (6) à partir de la vitre à essuyer, avec le ou les ergots d'encliquetage (15) sur le bras de support (6).

7. Bras d'essuie-glace selon l'une des revendications précédentes, **caractérisé en ce que** la tige (14) d'accrochage du ressort est montée de manière déplaçable et est guidée, par ses extrémités opposées, directement dans des évidements ou passages correspondants des flasques latéraux (2) de la partie de fixation (1) et peut être amenée à coopérer, par les parties qui sont voisines des côtés intérieurs des flasques latéraux (2), avec les cames d'encliquetage (15) du bras de support (6).

8. Bras d'essuie-glace selon l'une des revendications précédentes, **caractérisé en ce que** l'axe (18) est formé par une tige ou un goujon, qui franchit la distance entre les flasques latéraux (2) de la partie de fixation (1) et est relié rigidement, au niveau de ses extrémités opposées, aux flasques latéraux (2) de la partie de fixation (1).

9. Bras d'essuie-glace selon l'une des revendications précédentes, **caractérisé en ce que** l'axe (18) est formé par respectivement une partie saillante, qui fait saillie sur le côté intérieur d'un flasque latéral (2) de la partie de fixation (1), ces parties saillantes étant disposées en étant alignées entre elles.

10. Bras d'essuie-glace selon la revendication 9, **caractérisé en ce que** les parties saillantes, qui forment l'axe (18) de la tige (14) de suspension du ressort, formée de plusieurs éléments, possèdent un contour cylindrique.

11. Bras d'essuie-glace selon l'une des revendications précédentes, **caractérisé en ce que**, d'une manière rapportée au déplacement de rabattement du bras de support (6), dans le bord (16) du flasque latéral (2) du bras de support (6) est aménagé, en arrière de la came d'encliquetage (15), un renfoncement (17), dans lequel la douille (19) peut pénétrer au moins en partie et qui est adaptée au diamètre extérieur de la douille (19).

12. Bras d'essuie-glace selon l'une des revendications précédentes, **caractérisé en ce que** la douille (19) s'étend sur toute la distance entre les flasques latéraux (2) de la partie de fixation (1) et est guidée, par ses faces frontales opposées, contre les côtés intérieurs des flasques latéraux (2) de la partie de fixation (1).

13. Bras d'essuie-glace selon l'une des revendications précédentes, **caractérisé en ce que** la seconde extrémité (12) du ressort de traction (10) est agencée directement sous la forme d'un crochet ou est accrochée par l'intermédiaire d'un crochet de ressort séparé (13) sur la périphérie de la douille (19).

14. Bras d'essuie-glace selon la revendication 13, **caractérisé en ce que** la seconde extrémité (12), agencée directement sous la forme d'un crochet, du ressort de traction (10) ou le crochet séparé de ressort (13) est agencé en étant suffisamment plat pour ne pas faire saillie en direction de la vitre à essuyer, au-delà de la face inférieure de la partie de fixation (1) ou du bras de support (6).

15. Bras d'essuie-glace selon l'une des revendications précédentes, **caractérisé en ce que** la seconde extrémité (12) du ressort de traction (10) ou le crochet (13) du ressort est fixé en position centrée sur la tige (14) d'accrochage du ressort ou sur la douille (19).
